# EUROPÄISCHE PATENTSCHRIFT

(11) **EP 1 175 520 B1**
(45) Veröffentlichungstag und Bekanntmachung des Hinweises auf die Patenterteilung: **18.08.2004**
(21) Anmeldenummer: 00930983.2
(22) Anmeldetag: 22.03.2000
(51) Int. Cl.: D01F 2/00, D01F 1/10, C08J 5/18, C08L 1/02, A24D 3/10, A24D 3/12

(54) **VERFAHREN ZUR HERSTELLUNG VON CELLULOSISCHEN FORMKÖRPERN MIT HOHEM ADSORPTIONSVERMÖGEN**
METHOD FOR PRODUCING HIGHLY ADSORBENT CELLULOSIC FORMS
PROCEDE DE PRODUCTION DE CORPS MOULES CELLULOSIQUES A HAUTE CAPACITE D'ADSORPTION

(30) Priorität: 19.04.1999 DE 19917614
(43) Veröffentlichungstag der Anmeldung: 30.01.2002
(73) Patentinhaber: THÜRINGISCHES INSTITUT FÜR TEXTIL- UND KUNSTSTOFF-FORSCHUNG E.V., 07407 Rudolstadt (DE)
(72) Erfinder: BÜTTNER, Reiner, D-07407 Rudolstadt (DE); CLAUSSEN, Frank, D-07747 Jena (DE); KNOBELSDORF, Carmen, D-07318 Saalfeld (DE); KRIEG, Marcus, D-99423 Weimar (DE); TAEGER, Eberhard, D-07407 Weissbach (DE)
(74) Vertreter: Brandenburg, Thomas, Dr.
(86) Internationale Anmeldenummer: PCT/DE2000/000917
(87) Internationale Veröffentlichungsnummer: WO 2000/063470

(56) Entgegenhaltungen:
- WO-A-95/14398
- WO-A-95/35043
- WO-A-95/35044
- WO-A-96/14451
- DE-C- 256 959
- US-A- 2 754 829
- DATABASE WPI Section Ch, Week 199827 Derwent Publications Ltd., London, GB; Class A11, AN 1998-306389 XP002144354 & JP 10 110325 A (KOHJIN CO LTD), 28. April 1998 (1998-04-28)
- DATABASE WPI Section Ch, Week 199116 Derwent Publications Ltd., London, GB; Class A11, AN 1991-113477 XP002144355 & JP 03 054234 A (DAIWABO CREATE CO LTD), 8. März 1991 (1991-03-08)

## Beschreibung

Die Erfindung betrifft ein Verfahren zur Herstellung von Formkörpern mit hohem Adsorptionsvermögen nach dem Trocken-Naßextrusionsverfahren durch Bilden einer Lösung von 5 bis 20 Masse-% Cellulose in einem wasserhaltigen tertiären Aminoxid, Extrudieren der Lösung, Verziehen des Extrudats in einem nicht ausfällenden Medium und Ausfällen der Formkörper in einem wässrigen Fällbad. Die Erfindung betrifft auch einen Verbundstoff aus nach dem erfindungsgemäßen Verfahren hergestellten Formkörpern, insbesondere Fasern, und seine Verwendung als Filtermaterial.

Es ist bekannt, cellulosische Formkörper, insbesondere Fasern und Folien herzustellen, indem eine Lösung von Cellulose in Aminoxid-Hydrat, vorzugsweise in N-Methylmorpholin-N-oxid-Monohydrat verformt und mit einem Nichtlösungsmittel für die Cellulose, vorzugsweise Wasser, koaguliert wird. Durch unterschiedliche Formgebung und gleichzeitige Orientierung der Cellulosemoleküle erhält man Produkte mit vielfältiger Anwendbarkeit in textilen und technischen Einsatzgebieten.

In EP 0 789 790 ist die Herstellung von Formkörpern mit Anionenaustauscheigenschaften nach dem Aminoxid-Verfahren beschrieben. Diese Austauscheigenschaften werden dadurch erreicht, daß die Cellulose 0,02 bis 30 Masse-% eines Polyalkylenimins enthält. Diese Formkörper haben nur eine geringe Basizität und das Adsorptionsvermögen ist auf Anionen beschränkt. Durch die begrenzte Aufnahmefähigkeit der Spinnlösung für das in der Lösung lösliche Polyethyleniminderivat hat der gebildete Formkörper auch nur eine entsprechend begrenzte Austauschkapazität.

Aus WO 95/35044 ist ein Zigarettenfilter aus einem Faserverbundstoff mit Lyocell-Stapelfasern bekannt. Dieser Filter dient zur Entfernung von Teer und Feststoffteilchen aus dem Rauchstrom. Das Filtermaterial enthält keine Gruppen, die zur Adsorption von Ionen oder polaren Molekülen befähigt sind.

Der Erfindung liegt die Aufgabe zugrunde, ein Verfahren zur Herstellung von cellulosischen Formkörpern mit hohem Adsorptionsvermögen gegenüber polaren oder elektrisch geladenen Molekülen oder Ionen zu schaffen. Des weiteren soll ein Verfahren zur Herstellung von Formkörpern, insbesondere Fasern und Folien geschaffen werden, die aufgrund ihres hohen Adsorptionsvermögens zur Herstellung von Filtermaterial geeignet sind. Schließlich soll auch ein Verbundstoff aus diesen Formkörpern geschaffen werden, der als Filtermaterial in Zigaretten, Haushaltsmaschinen und in anderen Anwendungsbereichen einsetzbar ist. Weitere Vorteile ergeben sich aus der folgenden Beschreibung.

Diese Aufgabe wird bei dem eingangs genannten Verfahren erfindungsgemäß dadurch gelöst, daß man eine Lösung mit 0,01 bis 300 Masse-%, bezogen auf Cellulose, wenigstens eines Ionenaustauschers einer Kongröße von ≤ 100 µm extrudiert. Überraschenderweise wurde gefunden, daß die in den hergestellten Formkörpern eingelagerten Ionenaustauscher für die aus wässrigen Lösungen, Gasen oder Dämpfen zu adsorbierenden Ionen und/oder polaren Moleküle sehr gut zugänglich sind, obwohl die Einbettung aktiver Substanzen in Matrices im allgemeinen mit einer Aktivitätsminderung dieser Substanzen einhergeht. Darüber hinaus konnte festgestellt werden, daß die erfindungsgemäß hergestellten Formkörper eine deutlich höhere Adsorptionsgeschwindigkeit zeigen als die gleichen Ionenaustauscher in der üblichen Perlform. Die Adsorptionskapazität ist abhängig vom Gehalt der in die Cellulosematrix physikalisch eingelagerten Mengenanteile des Ionenaustauschers. Beispielsweise hat der erfindungsgemäße Formkörper, bestehend aus gleichen Gewichtsteilen Cellulose und Ionenaustauscher eine Adsorptionskapazität, die mit dem handelsüblichen Ionenaustauscher in Perlform mit etwa 50% Wassergehalt vergleichbar ist.

Nach der bevorzugten Ausführungsform des erfindungsgemäßen Verfahrens enthält die zur Extrusion eingesetzte Lösung 1 bis 200 Masse-%, vorzugsweise 10 bis 150 Masse-%, bezogen auf Cellulose, des Ionenaustauschers. Besonders bevorzugt werden Lösungen, die bezogen auf Cellulose 70 bis 100 Masse-% Ionenaustauscher enthalten.

Vorzugsweise liegt die Korngröße der Ionenaustauscher in dem Bereich ≤ 25 µm, insbesondere in dem Bereich ≤ 15 µm. Es können handelsübliche Ionenaustauscher eingesetzt werden, deren Korngröße jedoch im allgemeinen weit oberhalb des erfindungsgemäßen Bereiches liegt. Die für die Einarbeitung in die Lösung erforderliche Korngröße erreicht man durch die Aufmahlung der handelsüblichen, z.B. perlförmigen Ionenaustauscher. Zweckmäßigerweise stellt man die Korngröße der Ionenaustauscher durch Mahlung und Sichtung in einer Fließbett-Gegenstrahlmühle mit Turboplex-Feinsichtung ein.

Bevorzugt haben die Ionenaustauscher eine Polystyrol- oder Polyacrylatharzbasis. Insbesondere können die Harze sauer oder basisch derivatisierte Styrol-Divinylbenzol-Copolymerharze oder Acrylsäure-Divinylbenzol-Copolymerharze sein. Grundsätzlich können auch andere Trägermaterialien für die Austauschgruppen zum Einsatz kommen, wie z.B. Cellulose.

Die Bildung der mit dem Ionenaustauscher beladenen, extrudierbaren Lösung kann in verschiedenen Ausführungsformen erfolgen. Bei einer Ausführungsform dispergiert man den Ionenaustauscher in der bereits gebildeten Celluloselösung. Bei einer weiteren Ausführungsform bildet man zunächst eine Mischung aus Cellulose, Aminoxid und Wasser, stellt eine Suspension des Ionenaustauschers in Wasser her und setzt die Suspension der genannten Mischung zu und überführt diese durch Abdestillieren von Wasser in die Celluloselösung. Dieses Verfahren hat den Vorteil, daß die Bildung der Suspension des feinteiligen Ionenaustauschers in dem Wasser leichter möglich ist als die Dispergierung in der gebildeten Celluloselösung. Nötigenfalls kann die Suspendierung in Wasser durch Zugabe eines Tensids unterstützt werden.

Bei einer dritten Ausführungsform suspendiert man die Cellulose und den Ionenaustauscher in einer Mischung aus Aminoxid und Wasser und bildet dann aus der Suspension durch Wasserverdampfung bis zur Monohydratstufe die Lösung der Cellulose. In allen drei Fällen kann der Ionenaustauscher mehrere verschiedene Ionenaustauscher, insbesondere wenigstens einen Anionenaustauscher und wenigstens einen Kationenaustauscher umfassen. Der Ionenaustauscher ist in der Celluloselösung unlöslich und wird bei der Ausfällung der Cellulose in diese eingelagert, wobei eine solche Struktur entsteht, daß der Austauscher für die zu adsorbierenden Stoffe zugänglich bleibt.

Im allgemeinen stellt man nach dem erfindungsgemäßen Verfahren Fasern, Filamente oder Folien her. Es kann mit runden oder profilierten Düsenlochbohrungen, Hohldüsen oder Schlitzdüsen gearbeitet werden. Das bevorzugte Lösungsmittel im Rahmen des erfindungsgemäßen Verfahrens ist N-Methylmorpholin-N-oxid-Monohydrat.

Der ausgefällte Formkörper wird anschließend zur Entfernung des Aminoxids mit Wasser gewaschen, nachbehandelt und getrocknet. Die Nachbehandlung erfolgt zweckmäßig mit geeigneten Elektrolyten, um die austauschfähigen Gruppen des in die Cellulosematrix eingelagerten Austauschers zu regenerieren.

Durch die Aufmahlung und Dispergierung der Ionenaustauscher in der Extrusionslösung können Formkörper, insbesondere Fasern, Filamente oder Folien geschaffen werden, die in Abhängigkeit von den austauschfähigen Gruppen des Ionenaustauschers viele unterschiedliche Adsorberfunktionen ausüben können. So kann z.B. durch Dispergieren eines stark basischen Anionenaustauschers mit quarternären Ammoniumgruppen in den aktiven Gruppen -CH₂-N(C₂H₅)₃⁽⁺⁾Cl⁽⁻⁾ ein Formkörper erzeugt werden, der zur selektiven Entfernung von Nitrationen aus wässrigen Medien geeignet ist. Wird ein schwach basischer Ionenaustauscher mit primären Aminogruppen und zusätzlich ein schwach oder stark saurer Kationenaustauscher auf der Basis von Polyacrylat oder Styrolsulfonsäure/ Divinylbenzol in der Natriumform in den cellulosischen Formkörper eingebracht, so adsorbiert ein hieraus hergestellter Filter z.B. aus Zigarettenrauchgasen einerseits polare Bestandteile, wie die ziliartoxischen Aldehyde (Formaldehyd, Acrolein, Crotonaldehyd, Acetaldehyd u.a.) und die flüchtigen Phenole, und andererseits die giftigen basischen Rauchbestandteile, wie Ammoniak, aromatische Amine, Hydrazinderivate, sowie die toxischen sauren Rauchbestandteile, wie Blausäure, Salpetersäure u.a.

Durch Dispergieren eines schwach sauren Kationenaustauschers auf Polyacrylharzbasis mit Carboxylgruppen in der Lösung ergeben sich Formkörper, die sich zur Beseitigung der temporären Härte und von Schwermetallionen aus Wasser eignen. Letzeres kann auch sehr selektiv für eine Reihe von Schwermetall- bzw. Übergangsmetallionen durch Einlagerung von schwach sauren, chelatbildenden Iminodiacetatgruppen-haltigen Ionenaustauschern in die Cellulosematrix erfolgen.

Die Aufgabe wird ferner durch einen Verbundstoff, insbesondere als Tow, Vlies, Papier oder Filz, gelöst, der wenigstens teilweise aus nach dem Verfahren der Ansprüche 1 bis 12 hergestellten Fasern besteht. Dieser Verbundstoff kann gänzlich aus erfindungsgemäß hergestellten, mit Ionenaustauschern beladenen Lyocellfasern bestehen. Der Verbundstoff kann auch auf Basis einer Mischung von mit unterschiedlichen Ionenaustauschern (Kationenaustauschern und Anionenaustauschern) modifizierten cellulosischen Fasern bestehen, wobei ein Verbundstoff mit ähnlichen Wirkungen erhalten wird, wie wenn ein Fasermaterial mit zwei oder mehr unterschiedlichen Ionenaustauschern beladen wird. Schließlich ist es auch möglich, einen Verbundstoff aus erfindungsgemäß mit Ionenaustauschern beladenen Fasern sowie aus normalen Lyocellfasern oder anderen Fasern, wie z.B. Polyethylen, Polypropylen oder Zellstoff, in einem Naßvliesprozess herzustellen, wodurch man Vliesstoffe mit abstufbaren Filtereffizienzen erhält. Unter dem oben genannten Tow ist ein gekräuseltes Faserband aus vielen Einzelfilamenten zu verstehen.

Der erfindungsgemäße Verbundstoff eignet sich zur Verwendung als Filtermaterial zur Entfernung von Ionen und polaren Verbindungen aus Lösungen, Gasen und Dämpfen. Der Verwendungsbereich umfaßt insbesondere Filter für Zigaretten, Haushaltsmaschinen usw. für die Entfernung von giftigen oder störenden anorganischen oder organischen Ionen und Molekülen, wie z.B. Nitrat-, Nitrit- und Bicarbonatanionen, Schwermetallkationen, sauren oder basischen organischen Verbindungen, polaren organischen Verbindungen, wie Aldehyden und Ketonen. Der Schwerpunkt liegt anders als bei dem Filter nach WO 95/35044 in der Adsorption von molekulardispersen, insbesondere giftigen Bestandteilen, die durch austauscherfreie Lyocellfasern nicht zurückgehalten werden. Die erfindungsgemäß eingesetzten Ionenaustauscher sind feste Substanzen, die in der Cellulosematrix nur eingelagert, nicht aber gelöst werden. Es bestehen daher für diese Ionenaustauscher mengenmäßig keine durch die Löslichkeit in der Spinn- bzw. Extrusionslösung vorgegebenen mengenmäßigen Beschränkungen.

Zur weiteren Verdeutlichung des erfindungsgemäßen Verfahrens und der für die Verwendung der Verfahrensprodukte relevanten Eigenschaften dienen die folgenden Beispiele.

### Beispiel 1

Einer 9 Masse-%-igen Celluloselösung in N-Methylmorpholin-N-oxid-Monohydrat wird ein pulverförmiger nitratselektiver stark basischer Anionenaustauscher auf der Basis eines makroporösen Styrol-Divinylbenzol-Copolymer mit Trialkylammonium-Gruppen in Chlorid-Form und einer Korngröße ≤ 15 µm in einem Gewichtsanteil von 100 Masse-%, bezogen auf den Celluloseanteil, zugesetzt. Diese Spinnlösung wird in einem Kneter homogenisiert und bei einer Temperatur von ca. 90°C durch eine Spinndüse mit 150 Loch gesponnen. Die Abzugsgeschwindigkeit beträgt 20 m/min. Der multifile Faden wird durch mehrere Waschbäder geführt, um das N-Methylmorpholin-N-oxid zu entfernen. Danach wird der Faden durch eine 1%-ige wässrige Kochsalzlösung geführt, um die Chloridform des eingelagerten lonenaustauchermaterials vollständig zu generieren. Der Faden wird in Stapel von 6 mm geschnitten, bei ca. 80°C getrocknet oder schleuderfeucht belassen. Die Fasern haben einen Titer von 1,78 tex, eine Dehnung von 21,1 % und eine Reißkraft von 11,6 cN/tex. Die Totalkapazität nach DIN 54402 in wässriger Lösung beträgt 1,3 mmol/g Faser.

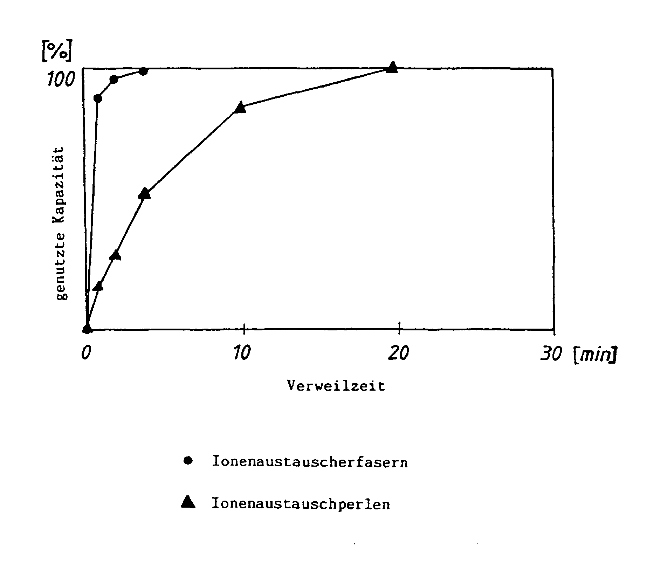

Es würde die Geschwindigkeit der Adsorption von Nitrationen aus wässriger Lösung unter Benutzung der erhaltenen Fasern als Adsorptionsmittel bestimmt. Zum Vergleich wurde die Adsorption der Nitrationen aus der gleichen Lösung mit dem in diesem Beispiel eingesetzten Anionenaustauscher, jedoch in Perlform mit einer effektiven Korngröße ≥ 430 µm und einer mittleren Korngröße von 600 bis 800 µm durchgeführt. Die Figur zeigt die unterschiedlichen Adsorptionsgeschwindigkeiten der perlförmigen Ionenaustauscher und der erfindungegemäß hergestellten Ionenaustauscherfasern.

### Beispiel 2

Einer Cellulosemaische in 60%-igem wässrigen N-Methylmorpholin-N-oxid wird eine wässrige Suspension eines stark basischen Anionenaustauschers auf der Basis eines gelförmigen Styrol-Divinylbenzol-Copolymer mit Trialkylammonium-Gruppen in Chlorid-Form und eines schwach sauren, makroporösen Kationentauschers auf der Basis eines Styrol-Divinylbenzol-Copolymer mit chelatbildenden Iminodiessigsäure-Gruppen in einer solchen Konzentration zugegeben, daß die Spinnlösung 9 Masse-% Cellulose und bezogen auf diese Cellulosemenge 99 Masse-% Anionentauscher und 1 Masse-% Kationentauscher enthält. Die Korngröße der suspendierten lonentauscher ist ≤ 15 µm. Nach dem Abdestillieren des Wassers bis zum N-Methylmorpholin-N-oxid-Monohydrat und dem Auflösen der Cellulose wird die Spinnlösung nach Beispiel 1 versponnen. Die Fasern haben einen Titer von 1,27 tex, eine Dehnung von 24,8% und eine Reißkraft von 9,9 cN/tex. Die Totalkapazität nach DIN 54402 in wässriger Lösung beträgt 1,3 mmol/g Faser. Zusätzlich werden selektiv Schwermetallionen wie z. B. Kupfer und Blei mit einer Kapazität von 0,01 mmol/g Faser gebunden.

### Beispiel 3

Einer Cellulosemaische in 60%-igem N-Methylmorpholin-N-oxid wird eine wässrige Suspension eines schwach sauren makroporösen Kationentauschers auf der Basis von vernetzten Polyacrylat in der Natrium-Form in einer solchen Konzentration zugegeben, daß die Spinnlösung 10 Masse-% Cellulose und bezogen auf den Celluloseanteil 70 Masse-% des Kationentauschers enthält. Die Korngröße des suspendierten lonentauschers lag bei ≤ 15 µm. Nach dem Abdestillieren des Wassers bis zum NMMNO-Monohydrat und der Auflösung der Cellulose wird die Spinnlösung nach Beispiel 1 versponnen. Nach dem Auswaschen des N-Methylmorpholin-N-oxid erfolgt die Regenerierung der Natrium-Form des Kationentauschers in die H⁺-Form mit verdünnter Schwefelsäure. Der Faden wird in Stapel von 6 mm geschnitten, bei ca. 80°C getrocknet oder schleuderfeucht belassen. Die Fasern haben einen Titer von 1,45 tex, eine Dehnung von 25% und eine Reißkraft von 7,65 cN/tex. Die lonentauscherfasern besitzen eine Totalkapazität nach DIN 54402 von 4,3 mmol/g Faser in wässriger Lösung.

### Beispiel 4

Spinnlösung hergestellt nach Beispiel 1, wird bei einer Temperatur von ca. 90°C durch eine Schlitzdüse zu einer Folie mit einer Dicke von ca. 40 µm im getrockneten Zustand verformt. Der Düsenschlitz hatte eine Länge von 62,8 mm und der Abstand der Düse zum wässrigen Fällbad betrug 10 mm. Die aus der Düse austretende Folie wurde nach der Luftstrecke durch 2 Wasserbäder von 6 m Länge geführt und aufgewickelt. Die Trocknung der Folie erfolgte bei 60°C. Die Totalkapazität dieser Folie lag bei 1,25 mmol/g Folie.

### Beispiel 5

Einer 9 Masse-%-igen Celluloselösung in N-Methylmorpholin-N-oxid-Monohydrat wird ein pulverförmiger schwach basischer Anionentauscher auf der Basis eines makroporösen Styrol-Divinylbenzol-Copolymer mit primären Aminogruppen und einer Korngröße ≤ 15 µm in einem Gewichtsanteil von 60 Masse-% bezogen auf den Celluloseanteil zugesetzt. Diese Spinnlösung wird in einem Kneter homogenisiert und bei einer Temperatur von ca. 90°C durch eine Spinndüse mit 150 Loch gesponnen. Die Abzugsgeschwindigkeit beträgt 20 m/min. Der multifile Faden wird durch mehrere Waschbäder geführt, um das N-Methylmorpholin-N-oxid zu entfernen. Der Faden wird in Stapel von 6 mm geschnitten und schleuderfeucht belassen. Die Fasern haben einen Titer von 1,0 tex, eine Dehnung von 21% und eine Reißkraft von 17,0 cN/tex. Diese Faser wird mit 25% einer fibrillierten Lyocellfaser mit einem Titer von 1,7 dtex und 25% einer Faser aus Beispiel 3 gemischt und in einer Naßvliesanlage zu einem Vlies mit einem Flächengewicht von 30 g/m² verarbeitet. Filterversuche mit diesem Vlies an Zigarettenrauch zeigten eine Filtereffizienz für gesamtflüchtige Aldehyde von 51%, für Cyanwasserstoffe von 70% und für Ammoniak von 65%.

### Beispiel 6

Einer 9 Masse-%-igen Celluloselösung in N-Methylmorpholin-N-oxid-Monohydrat wird ein pulverförmiger schwach basischer Anionentauscher auf der Basis eines makroporösen Styrol-Divinylbenzol-Copolymer mit primären Aminogruppen und einer Korngröße ≤ 15 µm in einem Gewichtsanteil von 100 Masse-%, bezogen auf den Celluloseanteil, zugesetzt. Diese Spinnlösung wird in einem Kneter homogenisiert und bei einer Temperatur von ca. 90°C durch eine Spinndüse mit 150 Loch gesponnen. Die Abzugsgeschwindigkeit beträgt 20 m/min. Der multifile Faden wird durch mehrere Waschbäder geführt, um das N-Methylmorpholin-N-oxid zu entfernen. Der Faden wird in Stapel von 6 mm geschnitten und schleuderfeucht belassen. Die Fasern haben einen Titer von 1,1 tex, eine Dehnung von 23% und eine Reißkraft von 12,5 cN/tex. Diese Faser wird zu gleichen Teilen mit einer fibrillierten Lyocellfaser mit einem Titer von 1,7 dtex und gleicher Stapellänge gemischt und in einer Naßvliesanlage zu einem Vlies mit einem Flächengewicht von 30 g/m² verarbeitet. Dieses Vlies hat eine Totalkapazität nach DIN 54402 in wässriger Lösung von 1 ,0 mmol/g Vlies. Filterversuche mit diesem Vlies an Zigarettenrauch zeigten eine Filtereffizienz für gesamtflüchtige Aldehyde von 72% und für Cyanwasserstoff von 55%.

## Patentansprüche

1. Verfahren zur Herstellung von cellulosischen Formkörpern mit hohem Adsorptionsvermögen nach dem Trocken-Naßextrusionsverfahren durch Bilden einer Lösung von 5 bis 20 Masse-% Cellulose in einem wasserhaltigen, tertiären Aminoxid, Extrudieren der Lösung, Verziehen des Extrudats in einem nicht ausfällenden Medium und Ausfällen der Formkörper in einem wässrigen Fällbad, **dadurch gekennzeichnet, daß** man eine Lösung mit 0,01 bis 300 Masse-%, bezogen auf Cellulose, wenigstens eines Ionenaustauschers einer Korngröße von ≤ 100 µm extrudiert.

2. Verfahren nach Anspruch 1, **dadurch gekennzeichnet, daß** die Lösung 1 bis 200 Masse-%, vorzugsweise 10 bis 150 Masse-%, bezogen auf Cellulose, des Ionenaustauschers enthält.

3. Verfahren nach Anspruch 1 oder 2, **dadurch gekennzeichnet, daß** die Korngröße der Ionenaustauscher in dem Bereich ≤ 25 µm liegt.

4. Verfahren nach einem der Ansprüche 1 bis 3, **dadurch gekennzeichnet, daß** die Ionenaustauscher eine Polystyrol- oder Polyacrylatharzbasis haben.

5. Verfahren nach einem der Ansprüche 1 bis 4, **dadurch gekennzeichnet, daß** man den Ionenaustauscher in der Celluloselösung dispergiert.

6. , Verfahren nach einem der Ansprüche 1 bis 4, **dadurch gekennzeichnet, daß** man eine Mischung aus Cellulose Aminoxid und Wasser bildet, den Ionenaustauscher in Wasser suspendiert, die Suspension der Mischung zusetzt und diese durch Abdestillieren von Wasser in die Lösung überführt.

7. Verfahren nach einem der Ansprüche 1 bis 4, **dadurch gekennzeichnet, daß** man die Cellulose und den Ionenaustauscher in einer Mischung aus Aminoxid und Wasser suspendiert und aus der Suspension durch Wasserverdampfung die Lösung der Cellulose bildet.

8. Verfahren nach einem der Ansprüche 1 bis 7, **dadurch gekennzeichnet, daß** die Lösung wenigstens einen Anionenaustauscher und wenigstens einen Kationenaustauscher enthält.

9. Verfahren nach einem der Ansprüche 1 bis 8, **dadurch gekennzeichnet, daß** man Fasern, Filamente oder Folien herstellt.

10. Verfahren nach einem der Ansprüche 1 bis 9, **dadurch gekennzeichnet, daß** man eine Celluloselösung in N-Methylmorpholin-N-oxid-Monohydrat bildet.

11. Verfahren nach einem der Ansprüche 1 bis 10, **dadurch gekennzeichnet, daß** man die ausgefällten Formkörper wäscht und die austauschfähigen Gruppen durch Behandlung mit geeigneten Elektrolyten regeneriert.

12. Verfahren nach einem der Ansprüche 1 bis 11, **dadurch gekennzeichnet, daß** man die Korngröße der Ionenaustauscher durch Mahlung und Sichtung in einer Fließbett-Gegenstrahlmühle mit Turboplex-Feinsichtung einstellt.

13. Verbundstoff, insbesondere Tow, Vlies, Papier oder Filz, der wenigstens teilweise aus nach dem Verfahren nach einem der Ansprüche 1 bis 12 hergestellten Fasern besteht.

14. Verwendung des Verbundstoffs nach Anspruch 13 als Filter zur Entfernung von Ionen oder/und polaren Verbindungen aus Lösungen, Gasen und Dämpfen.

15. Verwendung nach Anspruch 14 als Filter in Zigaretten oder Haushaltsmaschinen.

## Claims

1. Method for the production of cellulose molded bodies with high adsorptive capability pursuant to the dry-humid extrusion process, by preparing a solution of 5 - 20 mass-% cellulose in a hydrous, tertiary aminoxide, extrusion of solution, straining of extruded material in a non-precipitating substrate and precipitation of molded bodies in a hydrous setting bath, **characterized in that** a solution with 0,01 until 300 mass-%, referring to cellulose, of at least one ion exchanger with grain size ≤ 100 µ is being extruded.

2. Method according to claim 1, **characterized in that** said solution contains 1 through 200 mass-%, preferably 10 - 150 mass-%, referring to cellulose, of the ion exchanger.

3. Method according to claim 1 or 2, **characterized in that** the grain size of the ion exchangers is around ≤ 25 µm.

4. Method according to one of claims 1 through 3, **characterized in that** the ion exchangers have a polystyrene or polyacrylate resin basis.

5. , Method according to one of the claims 1 through 4, **characterized in that** the ion exchanger is being dispersed in the cellulose solution.

6. Method according to one of the claims 1 through 4, **characterized in that** a mixture of cellulose aminoxide and water is being prepared, the ion exchanger is suspended in water, a suspension is being added to the mixture , which is integrated into the solution by distilling of water.

7. Method according to one of the claims 1 through 4, **characterized in that** cellulose and ion exchanger are suspended in a mixture of aminoxide and water, preparing the cellulose solution from the suspension, by means of water evaporation.

8. Method according to one of the claims 1 through 7, **characterized in that** the solution contains at least one anion exchanger and at least one cation exchanger.

9. Method according to one of the claims 1 through 8, **characterized in that** fibers, filaments or foils are being produced.

10. Method according to one of the claims 1 through 9, **characterized in that** a cellulose solution is being prepared in n-methylmorpholin-n-oxide-monohydrate.

11. Method according to one of the claims 1 through 10, **characterized in that** the precipitated molded bodies are being washed and the interchangeable groups are regenerated by treatment with adequate electrolytes.

12. Method according to one of the claims 1 through 11, **characterized in that** the grain size of the ion exchanger is adjusted by grinding and separation in a fluidized bed-reflection mill with turboplex-fine separation.

13. Compound substance, especially tow, nonwoven material, paper or felt, at least partially consisting of fibers, produced pursuant to one of the claims 1 through 12.

14. Use of the compound according to claim 13 as filter for removal of ions and/or polar composition of solutions, gases and vapors.

15. Use according to claim 14 as filter in cigarettes or electrodomestic appliances.

## Revendications

1. Procédé de fabrication de corps moulés cellulosiques à haut pouvoir d'adsorption suivant le procédé d'extrusion sec-humide en formant une solution de 5 à 20 % en masse de cellulose dans un oxyde aminé tertiaire contenant de l'eau, en extrudant la solution, en déformant le produit extrudé dans un milieu non précipitant et en précipitant les corps moulés dans un bain de précipitation aqueux, **caractérisé en ce que** l'on extrude une solution avec 0,01 à 300 % en masse, par rapport à la cellulose, d'au moins un échangeur ionique d'une granulométrie ≤ 100 µm.

2. Procédé selon la revendication 1, **caractérisé en ce que** la solution contient 1 à 200 % en masse, de préférence 10 à 150 % en masse, par rapport à la cellulose, d'échangeur ionique.

3. Procédé selon la revendication 1 ou 2, **caractérisé en ce que** la granulométrie de l'échangeur ionique se situe dans la plage ≤ 25 µm.

4. Procédé selon l'une quelconque des revendications 1 à 3, **caractérisé en ce que** les échangeurs ioniques ont une base de résine de polystyrène ou de polyacrylate.

5. Procédé selon l'une quelconque des revendications 1 à 4, **caractérisé en ce que** l'on disperse l'échangeur ionique dans la solution de cellulose.

6. Procédé selon l'une quelconque des revendications 1 à 4, **caractérisé en ce que** l'on forme un mélange de cellulose, d'oxyde aminé et d'eau, que l'on met l'échangeur ionique en suspension dans de l'eau, que l'on ajoute la suspension dans le mélange et que l'on transforme celui-ci en solution en distillant l'eau.

7. Procédé selon l'une quelconque des revendications 1 à 4, **caractérisé en ce que** l'on met la cellulose et l'échangeur ionique en suspension dans un mélange d'oxyde aminé et d'eau et que l'on forme la solution de cellulose à partir de la suspension par évaporation de l'eau.

8. Procédé selon l'une quelconque des revendications 1 à 7, **caractérisé en ce que** la solution contient au moins un échangeur ionique et au moins un échangeur cationique.

9. Procédé selon l'une quelconque des revendications 1 à 8, **caractérisé en ce que** l'on fabrique des fibres, des filaments ou des films.

10. Procédé selon l'une quelconque des revendications 1 à 9, **caractérisé en ce que** l'on forme une solution de cellulose dans du N-méthylmorpholine-N-oxyde-monohydraté.

11. Procédé selon l'une quelconque des revendications 1 à 10, **caractérisé en ce que** l'on lave les corps moulés précipités et que l'on régénère les groupes aptes à l'échange par traitement avec des électrolytes adaptés.

12. Procédé selon l'une quelconque des revendications 1 à 11, **caractérisé en ce que** l'on définit la granulométrie des échangeurs ioniques par mouture et criblage dans un broyeur à contre-jet à lit fluidisé avec un criblage turboplex fin.

13. Matériau composite, notamment câble, non-tissé, papier ou feutre qui est composé au moins partiellement de fibres fabriquées suivant le procédé selon l'une quelconque des revendications 1 à 12.

14. Utilisation du matériau composite selon la revendication 13 comme filtre pour éliminer les ions et/ou liaisons polaires de solutions, gaz et vapeurs.

15. Utilisation selon la revendication 14 comme filtre dans des cigarettes ou des appareils ménagers.
